(19) Europäisches Patentamt
European Patent Office
Office européen des brevets

(11) EP 2 199 734 B1

(12) **EUROPÄISCHE PATENTSCHRIFT**

(45) Veröffentlichungstag und Bekanntmachung des Hinweises auf die Patenterteilung:
**09.03.2016 Patentblatt 2016/10**

(51) Int Cl.:
***G01B 9/02*** *(2006.01)*

(21) Anmeldenummer: **09177326.7**

(22) Anmeldetag: **27.11.2009**

(54) **Verfahren und System zur optischen Kohärenztomographie**

Method and System for Optical Coherence Tomography

Méthode et système pour Tomographie Optique Cohérente

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **16.12.2008 EP 08171873**

(43) Veröffentlichungstag der Anmeldung:
**23.06.2010 Patentblatt 2010/25**

(73) Patentinhaber: **Agfa HealthCare**
**2640 Mortsel (BE)**

(72) Erfinder: **Nebosis, Dr. Rainer**
**81541 München (DE)**

(74) Vertreter: **Linsmeier, Josef et al**
**Wallinger Ricker Schlotter Tostmann**
**Patent- und Rechtsanwälte**
**Zweibrückenstrasse 5-7**
**80331 München (DE)**

(56) Entgegenhaltungen:
**US-A1- 2004 263 859**

- **WATANABE ET AL: "Three-dimensional wide-field optical coherence tomography using an ultrahigh-speed CMOS camera" OPTICS COMMUNICATIONS, NORTH-HOLLAND PUBLISHING CO. AMSTERDAM, NL, Bd. 281, Nr. 7, 5. November 2007 (2007-11-05), Seiten 1889-1895, XP022496891 ISSN: 0030-4018**
- **J. SCHMIDT, K. CREATH: "Extended averaging technique for derivation of error-compenstaing algortihms in phase-shifting interferometry" APPLIED OPTICS, Bd. 34, Nr. 19, 1. Juli 1995 (1995-07-01), Seiten 3610-3619, XP002524634 DOI: 10.1364/AO.34.003610**
- **WATANABE Y ET AL: "Three-dimensional imaging by ultrahigh-speed axial-lateral parallel time domain optical coherence tomography" OPTICS EXPRESS, OPTICAL SOCIETY OF AMERICA, WASHINGTON, DC, US, Bd. 14, Nr. 12, 1. Juni 2006 (2006-06-01), Seiten 6286-6295, XP002443953 ISSN: 1094-4087 DOI: 10.1364/OE.14.005201**
- **K. GRIEVE, M. PAQUES, A. DUBOIS, J. SAHEL, C. BOCCARA, J-F. LE GARGASSON: "Ocular Tissue Imaging Using Ultrahigh-Resolution Full-Field Optical Coherence Tomography" INVESTIGATIVE OPHTHALMOLOGY & VISUAL SCIENCE, Bd. 45, Nr. 11, November 2004 (2004-11), Seiten 4126-4131, XP002524635 DOI: 10.1167/iovs.04-0584**

EP 2 199 734 B1

**Beschreibung**

Die Anmeldung betrifft ein Verfahren sowie ein entsprechendes System zur optischen Kohärenztomographie gemäß Anspruch 1 bzw. 11.

Die optische Kohärenztomographie (OCT) ist eine Methode zur Untersuchung lichtstreuender Proben. Biologisches Gewebe ist aufgrund seiner lichtstreuenden Eigenschaften für die Untersuchung mittels OCT besonders geeignet. Da OCT mit relativ geringen Lichtintensitäten auskommt und die Wellenlängen des verwendeten Lichts zumeist in nahen Infrarotbereich (750 nm bis 1350 nm) liegen, stellt sie - im Gegensatz zur Röntgendiagnostik - keine Strahlenbelastung für biologisches Gewebe dar.

OCT ist daher besonders für die Medizin von Bedeutung und vergleichbar mit der Ultraschalldiagnostik, wobei jedoch anstelle von Schall breitbandiges Licht mit sehr kurzer Kohärenzlänge verwendet wird. Die Laufzeiten des an unterschiedlichen Grenzschichten in der Probe reflektierten Lichts werden mit Hilfe eines Interferometers erfasst. Mittels OCT sind typischerweise um ein bis zwei Größenordnungen höhere Auflösungen als mit Ultraschall zu erreichen, jedoch ist die maximale Vermessungstiefe deutlich kleiner. Die gewonnenen Querschnittsbilder reichen aufgrund von optischer Streuung nur bis zu einer Tiefe von wenigen Millimetern in das Gewebe hinein. Die derzeit wichtigsten Anwendungsbereiche der OCT liegen in der Ophthalmologie, der Dermatologie sowie der Krebsdiagnose. Es gibt aller dings auch nichtmedizinische Anwendungen, wie z.B. in der Werkstoffprüfung.

Aus Y. Watanabe et al., OPTICS COMMUNICATIONS 261 (2006) 376-380 und Y. Watanabe et al., APPLIED OPTICS Vol. 44, No. 8 (2005) 1387 - 1392, ist bekannt, zweidimensionale Interferenzbilder aus einer bestimmten Tiefe einer Probe bei unterschiedlichen Phasendifferenzen zwischen dem Proben- und Referenzarm des Interferometers mit einer zweidimensionalen Kamera zu erfassen und daraus ein zweidimensionales Bild zu berechnen. Ein Aktuator verstellt die optische Weglänge eines Pfades eines optischen Interferometers. Bei einer ersten Position wird ein Messpunkt aufgenommen. Danach wird die Pfaddifferenz verändert und ein zweiter Messpunkt aufgenommen. Ein dritter Messpunkt wird in analoger Weise gewonnen. Aus diesen drei Messwerten wird die Amplitude des OCT-Signals berechnet. Bei dieser Methode kann nicht immer gewährleistet werden, dass die aus den auf diese Weise erhaltenen Interferenzbildern erzeugten Bildinformationen aus dem Inneren der Probe die bei bestimmten diagnostischen Anwendungen geforderte Qualität aufweisen. Außerdem ist bei diesem Verfahren eine sehr schnelle Bewegung des Aktuators notwendig, um Unschärfen aufgrund einer etwaigen Probenbewegung vermeiden zu können. Darüber hinaus ergeben sich sehr lange Totzeiten, in denen keine Bilderfassung erfolgen kann.

Aus US 2004/0263859 A1 ist ein OCT-Verfahren bekannt, bei welchem aus einem Nicht-Interferenzbild ($I_d$) eines Untergrunds und zwei bei unterschiedlichen Phasenlagen aufgenommenen Interferenzbildern ($I_0$, $I_\Phi$) ein Tomogramm einer bestimmten Schicht innerhalb eines Körpers ermittelt wird. Zur Verminderung des Rauschens werden die beiden bei unterschiedlichen Phasenlagen aufgenommenen Interferenzbilder ($I_0$, $I_\Phi$) jeweils durch eine Mittelung von mehreren zu unterschiedlichen Zeiten aufgenommenen Interferenzbilden erhalten. Bei diesem Verfahren kann nicht in allen Anwendungsfällen eine hohe Bildqualität des erhaltenen Tomogramms gewährleistet werden.

Es ist Aufgabe der Erfindung, ein Verfahren sowie ein entsprechendes System zur optischen Kohärenztomographie anzugeben, bei welchem auf einfache und schnelle Weise Bilder einer Probe mit möglichst hoher Qualität aufgenommen werden können.

Diese Aufgabe wird durch das Verfahren gemäß Anspruch 1 bzw. das entsprechende System gemäß Anspruch 11 gelöst.

Bei dem erfindungsgemäßen Verfahren wird ein Reflektor des Interferometers in mindestens drei unterschiedliche Positionen mit unterschiedlichen optischen Abständen zu einem Strahlteiler des Interferometers gebracht und das in einer bestimmten Tiefe der Probe reflektierte Licht von einem Detektor mehrmals erfasst und in entsprechende Detektorbilder, bei welchen es sich um Interferenzbilder handelt, umgewandelt, während sich der Reflektor in der jeweiligen Position befindet. Dies bedeutet, dass für eine bestimmte endliche Tiefe innerhalb der Probe bei mindestens drei unterschiedlichen Reflektorpositionen mehrere Detektorbilder, d.h. Interferenzbilder, erhalten werden. Die bei der jeweiligen Position des Reflektors erhaltenen Detektorbilder werden dann gemittelt, so dass für jede der Positionen des Reflektors ein gemitteltes Detektorbild, d.h. ein gemitteltes Interferenzbild, erhalten wird. Aus den für die wenigstens drei unterschiedlichen Positionen erhaltenen gemittelten Detektorbildern wird schließlich ein Tomogramm errechnet.

Das entsprechende erfindungsgemäße System umfasst ein Interferometer zur Ausgabe von Licht, mit dem eine Probe bestrahlt wird, mit einem Strahlteiler und mindestens einen Reflektor sowie einen Detektor zur Erfassung von Licht, welches von der Probe reflektiert wird, und ist gekennzeichnet durch eine Steuerungseinheit zur Steuerung des Systems in der Weise, dass der Reflektor in mindestens drei unterschiedliche Positionen mit unterschiedlichen optischen Abständen zum Strahlteiler gebracht wird, das in einer bestimmten Tiefe der Probe reflektierte Licht vom Detektor mehrmals erfasst und in entsprechende Detektorbilder, d.h. Interferenzbilder, umgewandelt wird, während sich der Reflektor in der jeweiligen Position befindet, die für die jeweilige Position des Reflektors erhaltenen Detektorbilder gemittelt werden, wobei jeweils ein gemitteltes Detektorbild, d.h. gemitteltes Interferenzbild, erhalten wird, und aus den für die unterschiedlichen Positionen erhaltenen gemittelten Detektorbildern ein Tomogramm ermittelt wird.

Im Unterschied zu dem aus dem Stand der Technik bekannten Verfahren, bei welchem aus einem Nicht-Interferenzbild des Untergrunds und zwei gemittelten Interferenzbildern aus einer bestimmten Schicht der Probe ein Tomogramm abgeleitet wird, werden bei dem erfindungsgemäßen Verfahren und System Tomogramme aus mindestens drei in einer bestimmten endlichen Tiefe innerhalb der Probe aufgenommenen gemittelten Interferenzbildern abgeleitet.

Die Erfindung basiert auf dem Gedanken, bei jeder der - vorzugsweise drei - unterschiedlichen Positionen des Referenzspiegels eine Anzahl von N Detektorbildern aus einer bestimmten endlichen Tiefe innerhalb der Probe in Einzelmessungen zu erfassen und diese dann zu jeweils einem gemittelten Detektorbild zu mitteln. Da die einzelnen Detektorbilder durch Erfassung von kohärentem Licht erhalten werden, kann daher auch von einer kohärenten Mittelung der Detektorbilder gesprochen werden. Erst nach der kohärenten Mittelung der N Detektorbilder zu jeweils einem gemittelten Detektorbild je Position des Referenzspiegels wird aus den gemittelten Detektorbildern ein Tomogramm errechnet. Dieser Schritt wird auch als Demodulation der gemittelten Detektorbilder bezeichnet.

Erfindungsgemäß wird hierzu ein Aktuator zur schrittweisen Veränderung der Pfadlängendifferenz in einem optischen Interferometer eingesetzt, wobei für jede Position des Aktuators N Einzelmessungen durchgeführt werden, während der Aktuator unbewegt ist. Erst danach wird der Aktuator um eine bestimmte Schrittweite, welche vorzugsweise 1/6 der mittleren Wellenlänge des in das Interferometer eingekoppelten Lichts beträgt, weiterbewegt. Es werden dann wiederum N Einzelmessungen aufgenommen. Bei der dritten Position und gegebenenfalls weiteren Positionen wird analog verfahren. Die jeweiligen N Messungen der unterschiedlichen Positionen werden zu jeweils einem gemittelten Detektorbild je Position gemittelt und erst dann demoduliert.

Zur Durchführung des erfindungsgemäßen Verfahrens ist eine sehr schnelle Kamera von Vorteil, da sich während des gesamten Messprozesses die Pfadlängendifferenz nicht wesentlich ändern darf. Vorzugsweise ist hierbei eine Stabilität im Bereich von nur einigen Nanometern (nm) zulässig. Der gesamte Messprozess sollte daher kürzer als eine Sekunde sein. Außerdem ist es vorteilhaft, eine lateral inkohärente Lichtquelle, wie z.B. eine Halogenlampe, zu verwenden, um ein Rauschen aufgrund von sog. Speckle bzw. intermodalen Cross-Talk im Falle einer Faseroptik-Beleuchtung zu vermeiden.

Theoretische Analysen haben gezeigt, dass bei der erfindungsgemäßen kohärenten Mittelung das Signal-zu-Rausch-Verhältnis fünfmal so groß ist wie bei einem Verfahren mit inkohärenter Mittelung, d.h. bei einer Mittelung der Detektorbilder erst nach deren Demodulation. Bei Messungen wurde überraschenderweise sogar ein bis zu 19 mal höheres Signal-zu-Rausch-Verhältnis gefunden als bei inkohärenter Mittelung.

Der Aktuator kann im Vergleich zu Verfahren nach dem Stand der Technik N mal langsamer sein. Darüber hinaus beträgt die Totzeit, während der keine Detektorbilder erfasst werden können, nur 1/N.

Zusammenfassend ist festzuhalten, dass durch das erfindungsgemäße Verfahren und System auf einfache und schnelle Weise Bilder einer Probe mit hoher Bildqualität aufgenommen werden können.

Vorzugsweise wird in das Interferometer Licht mit einer mittleren Wellenlänge eingekoppelt und der Reflektor durch Verschieben des Reflektors um jeweils eine Schrittweite in die mehreren unterschiedlichen Positionen gebracht, wobei die Schrittweite kleiner ist als die mittlere Wellenlänge. Insbesondere beträgt die Schrittweite ein Sechstel mittlerer Wellenlänge. Hierdurch wird eine besonders hohe Bildqualität gewährleistet. Wegen der sehr kleinen Schrittweiten wird diese Verschiebung des Reflektors im Folgenden auch als mikroskopische Verschiebung bezeichnet.

In einer weiteren bevorzugten Ausführung ist vorgesehen, dass der Reflektor in drei unterschiedliche Positionen gebracht wird und die für jede der drei Positionen des Reflektors erhaltenen Detektorbilder gemittelt werden, so dass für jede der drei Positionen ein gemitteltes Detektorbild erhalten wird, und aus den für die drei Positionen erhaltenen gemittelten Detektorbildern ein Tomogramm ermittelt wird. Auf diese Weise wird eine hohe Bildqualität erzielt, ohne gleichzeitig die Bilderfassung merklich zu verlangsamen.

Vorzugsweise ist hierbei jedem Bildpunkt der drei gemittelten Detektorbilder jeweils eine gemittelte Intensität $I_0$, $I_{20}$ bzw. $I_{240}$ zugeordnet, aus welchen entsprechende Bildpunkte des Tomogramms durch Demodulation ermittelt werden. Insbesondere werden die Bildpunkte B des Tomogramms aus den gemittelten Intensitäten $I_0$, $I_{120}$ bzw. $I_{240}$ hierbei wie folgt ermittelt:

$$B = 1/9 \cdot \left[ \left(2I_{120} - I_0 - I_{240}\right)^2 + 3\left(I_0 - I_{240}\right)^2 \right]$$

Durch die auf diese Weise vorgenommene Demodulation der gemittelten Detektorbilder wird auf zuverlässige und schnelle Weise ein Tomogramm erhalten.

Es ist außerdem von Vorteil, das von der Probe reflektierte Licht vom Detektor mindestens 50 mal zu erfassen und in mindestens 50 entsprechende Detektorbilder umzuwandeln, während sich der Reflektor in der jeweiligen Position befindet. Auch durch diese Maßnahme wird eine hohe Bildqualität erreicht und dabei gleichzeitig die Geschwindigkeit der Bilderfassung nicht wesentlich verlangsamt.

Vorzugsweise wird das von der Probe reflektierte Licht vom Detektor in Form von zweidimensionalen Detektorbildern mit einer Bildrate von mindestens 1000 Detektorbildern pro Sekunde erfasst. Als Detektor wird hierzu eine Hochgeschwindigkeitskamera mit zweidimensionaler Detektorfläche verwendet. Auf diese Weise werden Beeinträchtigungen der Bildqualität durch ein Verwackeln der Probe während des Messprozesses stark vermindert. Bei den meisten Anwendungen wird hierdurch gewährleistet, dass sich die Pfadlängendifferenz augrund eines Verwackelns der Probe während einer Messung im Bereich von nur wenigen Nanometern (nm) ändert.

Es ist außerdem bevorzugt, dass die mittlere Wellenlänge des in das Interferometer eingekoppelten Lichts zwischen etwa 1100 nm und etwa 1500 nm liegt. Neben einer größeren Eindringtiefe in die Probe wird auch hierdurch eine hohe Bildqualität gewährleistet.

Das in das Interferometer einzukoppelnde Licht wird vorteilhafterweise von einer thermischen Lichtquelle, insbesondere von einer Halogen-Lichtquelle, erzeugt und durch ein spektrales Gauss-Filter gefiltert. Hierdurch wird ein Rauschen aufgrund von sog. Speckle bzw. intermodalem Cross-Talk im Falle einer Faseroptik-Beleuchtung vermieden und dementsprechend die Bildqualität weiter erhöht.

In einer weiteren vorteilhaften Ausgestaltung der Erfindung ist vorgesehen, dass das von der Probe reflektierte und vom Detektor detektierte Licht aus einer bestimmten Tiefe der Probe stammt und die Tiefe durch eine Veränderung des Abstandes des Reflektors und/oder eines zwischen dem Strahlteiler und dem Reflektor befindlichen Reflektorobjektivs vom Strahlteiler, vorzugsweise durch eine zusätzliche Veränderung der Position eines zwischen dem Strahlteiler und der Probe befindlichen Probenobjektivs, eingestellt wird, wobei die Veränderung des Abstandes bzw. der Position wesentlich größer ist als die mittlere Wellenlänge des in das Interferometer eingekoppelten Lichts. Im Gegensatz zur oben beschriebenen mikroskopischen Veränderung der Reflektorposition um Bruchteile der mittleren Wellenlänge kann die bei der Einstellung der Tiefe vorgenommene Änderung des Abstandes des Reflektors bzw. Reflektorobjektivs vom Strahlteiler als makroskopische Veränderung bezeichnet werden.

Auf diese Weise wird ein sog. Tiefenscan oder z-Scan realisiert, indem der optische Abstand des Reflektors zum Strahlteiler jeweils um makroskopische optische Wege von typischerweise 0,1 mm bis zu mehreren Millimetern schrittweise verändert und dann jeweils das von der Probe reflektierte Licht mit dem zweidimensionalen Detektor in erfindungsgemäßer Weise erfasst wird. Aufgrund der makroskopischen Änderung des optischen Abstands des Reflektors zum Strahlteiler wandern die Tiefenbereiche, in welchen die sog. Kohärenzbedingung für das Auftreten von Interferenz erfüllt ist, durch die Probe, so dass das von einzelnen Ebenen in diesen Tiefen der Probe reflektierte Licht mit dem von einem Referenzspiegel reflektierten Licht interferieren kann. Die jeweils auftretenden Interferenzerscheinungen werden als Detektorbilder vom zweidimensionalen Detektor erfasst und gemittelt. Die Kohärenzbedingung besagt u.a., dass die jeweils von der Probe und dem Referenzspiegel reflektierten Lichtwellen eine konstante Phasenbeziehung zueinander haben müssen, um miteinander interferieren zu können. Da das in das Interferometer eingekoppelte Licht im Allgemeinen eine sehr kurze Kohärenzlänge von typischerweise 10 μm aufweist, ist die Bedingung einer konstanten Phasenbeziehung nur in bestimmten Tiefen oder Tiefenbereichen der Probe erfüllt, welche daher auch als Kohärenz-Gate bezeichnet werden. Jede Position des Reflektors entspricht daher einer bestimmten Tiefe oder einem Bereich um diese bestimmte Tiefe innerhalb der Probe, für welche die Kohärenzbedingung erfüllt ist, so dass eine Interferenz zwischen dem vom Referenzspiegel und dem in dieser Tiefe der Probe reflektierten Licht auftreten kann. Gegenüber den aus dem Stand der Technik bekannten Systemen und Verfahren können hierdurch auf einfachere und schnellere Weise Bilder aus unterschiedlichen Tiefen der Probe aufgenommen werden. Insbesondere kann auf eine bewegliche Bühne zur Veränderung des Abstands der Probe relativ zum Interferometer verzichtet werden.

Bei der erfindungsgemässen Ausführungsform ist außerdem vorgesehen, dass durch das Probenobjektiv vom Interferometer ausgegebenes Licht in einem in oder auf der Probe liegenden Fokus fokussiert wird, wobei zusätzlich zur makroskopischen Änd e-rung des optischen Abstands des Reflektors zum Strahlteiler auch die Abbildungseigenschaften des Probenobjektivs in der Weise gesteuert werden, dass der Fokus im Bereich der jeweiligen Tiefe der Probe liegt. Durch dieses sog. Fokus Tracking wird erreicht, dass das bei unterschiedlichen Positionen des Reflektors aus unterschiedlichen Tiefen der Probe erfasste Licht stets mit der größtmöglichen Schärfe auf die in einer Fläche angeordneten Detektorelemente des Detektors abgebildet wird.

In einer besonders vorteilhaften Ausgestaltung der Erfindung erfolgt die mikroskopische Verschiebung des Reflektors um jeweils eine Schrittweite, welche kleiner ist als die mittlere Wellenlänge, durch einen ersten Antrieb und die makroskopische Veränderung des Abstandes des Reflektors und/oder des Reflektorobjektivs vom Strahlteiler, welche wesentlich größer ist als die mittlere Wellenlänge des in das Interferometer eingekoppelten Lichts, durch einen zweiten Antrieb, welcher vom ersten Antrieb verschieden ist.

Vorzugsweise ist der Reflektor und das Reflektorobjektiv derart mit dem ersten Antrieb und dem zweiten Antrieb gekoppelt, dass der zweite Antrieb den Reflektor und das Reflektorobjektiv gemeinsam bewegen und der erste Antrieb nur den Reflektor alleine verschieben kann. Als erster Antrieb dient beispielsweise ein piezoelektrischer Aktuator, welcher an einer Halterung befestigt und mit dem Reflektor gekoppelt ist. Als zweiter Antrieb dient beispielsweise eine von einem Motor angetriebene Spindel, welche über eine Spindelmutter mit der Halterung, an welcher neben dem Reflektor auch das Reflektorobjektiv angebracht ist, gekoppelt ist.

Durch die separaten Antriebe für die mikroskopische Reflektorbewegung einerseits und die makroskopische Bewegung des Reflektors und des Reflektorobjektivs andererseits wird zum einen das Problem gelöst, dass Antriebe, die makroskopische Hübe erzeugen können, in der Regel nicht so gut stabilisiert werden können, dass der Reflektor bei der erfindungsgemäßen kohärenten Mittelung ausreichend exakt in eine ausreichend ruhige Position gebracht werden könnte. Darüber hinaus wird das Problem behoben, dass bei schnellen mikroskopischen Bewegungen, wie sie beim Anfahren der jeweiligen Positionen ausgeführt werden, nicht nur der Reflektor sondern auch das Reflektorobjektiv mitbewegt werden muss, wodurch aufgrund der insgesamt relativ großen Gesamtmasse ein Nachschwingen des in eine bestimmte Position gebrachten Reflektors die Folge wäre und bis zur Erfassung des von der Probe reflektierten Lichts noch gewartet werden müsste, bis das Nachschwingen abgeklungen ist und der Reflektor ruhig steht. Dies würde jedoch die Erfassung der Detektorbilder in der jeweiligen Position verzögern und damit das Verfahren verlangsamen.

Vorzugsweise ist der zweite Antrieb als selbsthemmender Antrieb ausgestaltet. Hierunter ist ein Antrieb zu verstehen, bei dem ein Verrutschen oder Verdrehen der durch den Antrieb in eine bestimmte Position oder Stellung gebrachte Komponente, d.h. des Reflektors bzw. Reflektorobjektivs, mittels eines durch Reibung verursachten Widerstands verhindert wird. Eine Selbsthemmung wird beispielsweise durch eine von einem Motor angetriebene Präzisionsspindel realisiert, welche mittels einer vorgespannten Spindelmutter mit dem Reflektor bzw. Reflektorobjektiv gekoppelt ist. Wird eine bestimmte Position des Reflektors bzw. Reflektorobjektivs erreicht, wird diese im Wesentlichen durch Reibungskräfte zwischen Spindel und Spindelmutter gehalten, so dass eine aktive Regelung zum Halten der Position nicht erforderlich ist und der Motor abgeschaltet werden kann. Im Falle eines nicht selbsthemmenden Antriebs wäre dagegen ein aktiver Regelungkreis zum Halten der Position erforderlich, was im Allgemeinen jedoch dazu führen würde, dass der Reflektor bzw. das Reflektorobjektiv um seine SollPosition herum hin- und herpendeln würde. Diese - wenn auch sehr kleinen Pendelausschläge - würden die erfindungsgemäße kohärente Mittelung unmöglich machen, sofern diese größer als etwa 50 nm wären. Ein selbsthemmender zweiter Antrieb kann dem gegenüber nach Erreichen der gewünschten Position abgeschaltet werden, so dass keine Pendelausschläge auftreten und eine exakte mikroskopische Verschiebung des Reflektors mittels des ersten Antriebs gewährleistet wird.

Durch die erfindungsgemäße Verwendung von zwei separaten Antrieben wird somit einerseits eine zuverlässige und robuste makroskopische Verschiebung des Reflektors einschließlich Reflektorobjektiv erreicht, um eine scharfe Abbildung des Reflektors auf den Detektor in allen eingestellten Tiefen der Probe zu gewährleisten, und andererseits eine exakte, schwingungsfreie und schnelle mikroskopische Positionierung des Reflektors bei der Aufnahme von Detektorbildern in mikroskopisch verschiedenen Positionen in einer bestimmten Tiefe der Probe ermöglicht.

In einer alternativen Variante der Erfindung ist vorgesehen, dass der Reflektor zusammen mit dem zwischen dem Strahlteiler und dem Reflektor befindlichen Reflektorobjektiv um jeweils eine Schrittweite verschoben und dabei in die mehreren unterschiedlichen Positionen mit unterschiedlichen optischen Abständen zum Strahlteiler gebracht wird, wobei die Schrittweite kleiner ist als die mittlere Wellenlänge. Die makroskopische Veränderung des Abstandes des Reflektors und des Reflektorobjektivs vom Strahlteiler bei der Einstellung einer bestimmten Tiefe einerseits und die mikroskopische Bewegung des Reflektors und des Reflektorobjektivs zur Wahl der unterschiedlichen Positionen andererseits können bei dieser Variante von nur einem gemeinsamen Antrieb, z.B. einem geeigneten Aktuator, bewerkstelligt werden.

In einer weiteren Ausgestaltung der Erfindung bleibt der Reflektor nach der Ermittlung eines Tomogramms in seiner zuletzt eingenommenen Endposition. Erst nach dem Einstellen einer anderen Tiefe, aus welcher das von der Probe reflektierte und vom Detektor detektierte Licht stammt, wird der Reflektor dann von seiner Endposition aus schrittweise über eine oder mehrere Zwischenpositionen in seine Ausgangsposition zurückbewegt, wobei das von der Probe reflektierte Licht vom Detektor mehrmals erfasst wird und in entsprechende Detektorbilder umgewandelt wird, während sich der Reflektor in der jeweiligen Position befindet. Hierdurch wird eine aufeinander folgende Aufnahme von mehreren Tomogrammen aus unterschiedlichen Tiefen der Probe deutlich beschleunigt, was dazu beiträgt, den Zeitaufwand für die Erzeugung eines dreidimensionalen Tomogramms der Probe aus mehreren zweidimensionalen Tomogrammen in Grenzen zu halten.

Es ist außerdem bevorzugt, dass bei der Mittelung der Detektorbilder nur diejenigen bei der jeweiligen Position des Reflektors erhaltenen Detektorbilder herangezogen werden, die in Zeitpunkten erfasst wurden, in denen sich der Reflektor in der jeweiligen Position in einer Ruhelage befand. Hierbei werden bei der jeweiligen Mittelung nur diejenigen Detektorbilder herangezogen, die in Zeiten außerhalb, d.h. vor oder nach, der Änderung der Position des Reflektors erfasst wurden. Diese Zeiten befinden sich insbesondere in einem ausreichenden Abstand nach einer Änderung der Position des Reflektors, um eine Beeinträchtigung der Bildqualität aufgrund von Vibrationen des Reflektors, welche unmittelbar nach der Positionsänderung auftreten können, zu vermeiden. Auch diese Maßnahme trägt zur Erhöhung der Bildqualität bei, ohne die Geschwindigkeit der Bildaufnahme wesentlich zu verlangsamen.

Im Sinne der Erfindung ist unter einer Bestrahlung der Probe mit dem vom Interferometer ausgegebenen Licht zu verstehen, dass das vom Interferometer, das den beweglichen Reflektor umfasst, ausgegebene Licht direkt auf die Probe trifft oder erst nach Durchlaufen eines weiteren Interferometers, welches zwischen dem Interferometer und der Probe angeordnet ist, auf die Probe trifft.

Im Sinne der Erfindung ist unter einer Erfassung des von der Probe, insbesondere in unterschiedlichen Tiefen der Probe, reflektierten Lichts durch den Detektor zu verstehen, dass der Detektor das Licht von Interferenzerscheinungen erfassen, die bei einer Überlagerung des von der Probe, insbesondere in unterschiedlichen Tiefen der Probe, reflektierten Lichts mit dem an einem Referenzspiegel reflektierten Licht entstehen. Die Überlagerung des Lichts kann hierbei entweder in dem Interferometer, das den beweglichen Reflektor umfasst, oder in einem weiteren Interferometer erfolgen.

Die Erfindung sowie weitere vorteilhafte Ausgestaltungen der Erfindung werden nachfolgend anhand von Figuren näher erläutert. Es zeigen:

> Fig. 1 ein Ausführungsbeispiel des erfindungsgemäßen OCT-Systems;
> Fig.2 ein Diagramm zur Erläuterung des erfindungsgemäßen Verfahrens.

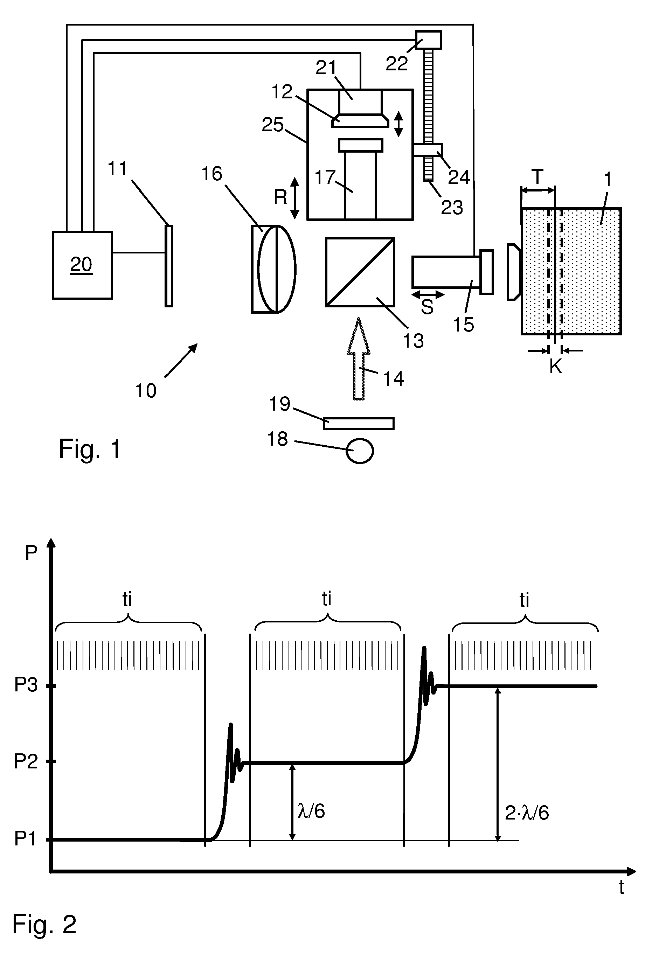

Fig. 1 zeigt ein erstes Ausführungsbeispiel des erfindungsgemäßen OCT-Systems mit einem Interferometer 10, das einen beweglichen Referenzspiegel 12 als Reflektor, einen Strahlteiler 13, ein Probenobjektiv 15, ein Detektorobjektiv 16, ein Referenzobjektiv 17 und einen Detektor 11 umfasst, sowie einer Steuerungseinheit 20 zur erfindungsgemäßen Steuerung des Systems.

In das Interferometer 10 wird Licht 14 eingekoppelt, welches durch spektrale Filterung des von einer Lichtquelle 18, insbesondere einer Halogenlampe, emittierten Lichts erhalten wird. Die spektrale Filterung erfolgt durch ein optisches Filter 19, dessen spektrale Transmission einen Gauss-förmigen Verlauf aufweist und welches daher auch als spektrales Gauss-Filter bezeichnet wird. Die mittlere Wellenlänge $\lambda$ des in das Interferometer 10 eingekoppelten Lichts 14 liegt zwischen etwa 1100 nm und 1500 nm.

Das eingekoppelte Licht 14 wird vom Strahlteiler 13 in einen ersten Teilstrahl in Richtung Probenobjektiv 15 und einen zweiten Teilstrahl in Richtung Referenzobjektiv 17 geteilt. Der erste Teilstrahl durchquert das Probenobjektiv 15, trifft auf eine Probe 1, wird von dieser reflektiert, durchläuft dann wieder das Probenobjektiv 15 und überlagert sich im Strahlteiler 13 mit dem am Referenzspiegel 12 reflektierten zweiten Teilstrahl zu einem dritten Teilstrahl, welcher durch das Detektorobjektiv 16 auf den zweidimensionalen Detektor 11 abgebildet und von diesem als Detektorbild erfasst wird.

Der Detektor 11 ist vorzugsweise ein Halbleiterdetektor in CMOS-Technologie und weist eine Vielzahl von in einer Fläche angeordneten Detektorelementen (Pixel) auf, deren Anzahl typischerweise 640 x 512 Pixel beträgt. Aufgrund der hierdurch möglichen zeitgleichen "parallelen" Erfassung einer Vielzahl von Reflexionen in unterschiedlichen Orten in einer Ebene E in einer bestimmten Tiefe T der Probe 1 kann diese Art der OCT auch als parallele OCT bezeichnet werden. Vorzugsweise handelt es sich bei dem Detektor 11 um eine Hochgeschwindigkeitskamera, mit welcher die einzelnen Detektorbilder mit einer Bildrate von mindestens 1000 Detektorbildern pro Sekunde aufgenommen werden können.

Die in einer Tiefe T unterhalb der Probenoberfläche befindliche Ebene E, von welcher Detektorbilder erfasst werden, wird durch eine Veränderung des Abstandes des Referenzspiegels 12 und/oder des Referenzobjektivs 17 vom Strahlteiler 13 um einen Weg in Richtung R erreicht, welcher deutlich größer ist als die mittlere Wellenlänge $\lambda$ des in das Interferometer 10 eingekoppelten Lichts 14. Durch gleichzeitige Veränderung der Position des Probenobjektivs 15 in Richtung S relativ zum Strahlteiler 13 wird erreicht, dass der Fokus der das Probenobjektiv 15 durchlaufenden ersten Teilstrahlen jeweils innerhalb des Kohärenz-Gate K liegt, so dass die von der Ebene E aus der Tiefe T erhaltenen Interferenzsignale sowie die Schärfe der von dem Detektor 11 erfassten Detektorbilder, d.h. der Interferenzmuster, für alle Tiefen T in der Probe 1 maximal sind. Die Veränderung des Abstandes des Referenzspiegels 12 und/oder des Referenzobjektivs 17 sowie des Probenobjektivs 15 vom Strahlteiler 13 wird vorzugsweise mittels Spindelantrieben realisiert, die ihrerseits beispielsweise von Schrittmotoren angetrieben werden.

Darüber hinaus ist der Referenzspiegel 12 mit einem Aktuator 21 gekoppelt, durch welchen der Referenzspiegel 12 um jeweils eine Schrittweite verschoben wird und dabei in mehrere unterschiedliche Positionen gebracht wird. Im Gegensatz zu der oben beschriebenen Vorgabe einer bestimmten Tiefe T innerhalb der Probe 1 beträgt die Schrittweite hierbei jedoch nur einen Bruchteil, vorzugsweise ein Sechstel, der mittleren Wellenlänge $\lambda$, des in das Interferometer eingekoppelten Lichts 14. Der Aktuator 21 ist vorzugsweise als piezoelektrischer Aktuator ausgebildet, mit dem diese Positionen auf einfache Weise und dabei äußerst präzise eingestellt werden können.

Der mit dem Referenzspiegel 12 gekoppelte Aktuator 21 ist an einer Halterung 25 befestigt, in welcher neben dem Referenzspiegel 12 auch das Referenzobjektiv 17 integriert ist. Die Halterung 25 ist über eine Spindelmutter 24 mit einer Präzisionsgewindespindel 23 gekoppelt, die von einem Schrittmotor 22 angetrieben wird. Durch diese Ausgestaltung wird erreicht, dass zur Einstellung einer bestimmten Tiefe T innerhalb der Probe 1 der Referenzspiegel 12 zusammen mit dem Referenzobjektiv 17 um makroskopische Entfernungen bewegt wird, während die Einstellung der, vorzugsweise drei, unterschiedlichen Positionen des Referenzspiegels 12 bei der Erfassung des in der Tiefe T reflektierten Lichts durch eine mikroskopische Verschiebung allein des Referenzspiegels 12 mittels Aktuator 21 erreicht wird.

In einer alternativen Variante des Systems ist der Antrieb (nicht dargestellt) zur Veränderung des Abstandes des Referenzspiegels 12 und/oder des Referenzobjektivs 17 vom Strahlteiler 13 so ausgelegt, dass er neben makroskopischen Positionsänderungen mit Schrittweiten, die deutlich größer sind als die mittlere Wellenlänge λ des in das Interferometer 10 eingekoppelten Lichts 14, eine mikroskopische Bewegung des Referenzspiegels 12 und des Referenzobjektivs 17 mit einer Schrittweite ausführen kann, die nur einen Bruchteil der mittleren Wellenlänge λ des in das Interferometer eingekoppelten Lichts 14 beträgt. Diese mikroskopische Bewegung muss sehr präzise mit einem Fehler von nur wenigen Nanometern erfolgen. Bei dieser Variante kann auf den zusätzlichen Aktuator 21 zur Einstellung der unterschiedlichen Positionen des Referenzspiegels 12 verzichtet werden.

In dem in Fig. 1 dargestellten Beispiel werden der Schrittmotor 22, der Antrieb (nicht dargestellt) des Probenobjektivs 15, der Aktuator 21 und der Detektor 11 durch die Steuerungseinheit 20 in erfindungsgemäßer Weise derart angesteuert, dass in jeder Position des Referenzspiegels 12 eine Vielzahl von Detektorbildern für eine bestimmte Tiefe T innerhalb der Probe 1 erfasst werden. Vorzugsweise werden je Position mindestens 50 Detektorbilder erfasst, die anschließend gemittelt werden, so dass je Position ein gemitteltes Detektorbild erhalten wird. Die bei unterschiedlichen Positionen des Referenzspiegels 12 für eine bestimmte Tiefe T innerhalb der Probe 1 erhaltenen gemittelten Detektorbilder werden sodann einer Demodulation unterzogen, durch welche schließlich ein Tomogramm, d.h. ein zweidimensionales Bild, der in der Tiefe T befindlichen Ebene E der Probe 1 erhalten wird.

Dies wird im Zusammenhang mit dem in Fig. 2 dargestellten Diagramm näher erläutert. Das Diagramm zeigt einen Verlauf der Positionen P des Referenzspiegels 12 über der Zeit t. Ausgehend von einer ersten Position P1 wird der Referenzspiegel 12 nach einem bestimmten ersten Zeitraum mit Hilfe des piezoelektrischen Aktuators 21 durch Verschieben um eine Schrittweite λ/6 in eine zweite Position P2 gebracht. Nach einem weiteren zweiten Zeitraum wird der Referenzspiegel 12 um eine weitere Schrittweite λ/6 in eine dritte Position P3 gebracht. Der Abstand der dritten Position P3 zur ersten Position P1 beträgt dann 2 ·λ/6. Der Referenzspiegel 12 durchläuft vor dem Erreichen der zweiten bzw. dritten Position P2 bzw. P3 jeweils einen Einschwingvorgang, welcher an den Oszillationen im Verlauf der Positionen P erkennbar ist.

In dem Zeitraum, in dem sich der Referenzspiegel 12 in der ersten, zweiten und dritten Position P1, P2 bzw. P3 befindet, wird mit dem Detektor 11 jeweils eine Vielzahl von aufeinander folgenden Detektorbildern erfasst. Die bei jeder der Positionen P1, P2 bzw. P3 erhaltenen Detektorbilder werden gemittelt, wobei für jede der Positionen P1, P2 bzw. P3 ein gemitteltes Detektorbild erhalten wird. Bei der jeweiligen Mittelung werden nur diejenigen bei einer Position P1, P2 bzw. P3 erhaltenen Detektorbilder herangezogen, die in Zeitpunkten außerhalb des Verschiebens des Referenzspiegels 12, insbesondere außerhalb der Einschwingvorgänge des Referenzspiegels 12, erfasst wurden. Diese Zeitpunkte ti, in denen sich der Referenzspiegel 12 in Ruhelage befand, sind im gezeigten Diagramm durch kurze senkrechte Linien gekennzeichnet.

Auf diese Weise wird für die erste Position P1 ein erstes gemitteltes Detektorbild $I_0$, für die zweite Position P2 ein zweites gemitteltes Detektorbild $I_{120}$ und für die dritte Position P3 ein drittes gemitteltes Detektorbild $I_{240}$ erhalten. Die jeweiligen Indizes 0, 120 und 240 stehen in diesem Fall für eine Phasendifferenz von 0°, 120° bzw. 240°, welche durch eine Verschiebung des Referenzspiegels 12 um 0, λ/6 bzw. 2 λ/6 erzeugt wird.

Aus den gemittelten Detektorbildern $I_0$, $I_{120}$ bzw. $I_{240}$ wird schließlich ein Tomogramm B der in der Tiefe T der Probe 1 befindlichen Ebene E wie folgt berechnet:

$$B = 1/9 \cdot \left[ (2I_{120} - I_0 - I_{240})^2 + 3(I_0 - I_{240})^2 \right]$$

Auf diese Weise können weitere Tomogramme B von Ebenen E in anderen Tiefen T innerhalb der Probe 1 erhalten werden, welche ggf. zu einem dreidimensionalen Tomogramm zusammengefügt werden können.

Vorzugsweise wird der Referenzspiegel 12 nach der Ermittlung eines Tomogramms B nicht wieder in seine Anfangsposition, in diesem Fall die erste Position P1, zurückgefahren, sondern bleibt in seiner zuletzt eingenommenen Position, in diesem Fall die dritte Position P3, und wird von dieser aus schrittweise wieder in seine Anfangsposition zurückbewegt. Nach dem Einstellen einer anderen Tiefe T der Ebene E werden im oben dargestellten Beispiel also zuerst Detektorbilder erfasst, während sich der Referenzspiegel 12 in der dritten Position P3 befindet, und anschließend gemittelt. Danach werden Detektorbilder in der zweiten Position P2 und schließlich in der ersten Position P1 erfasst und danach jeweils gemittelt. Auf diese Weise wird die Aufnahme einer größeren Anzahl von Tomogrammen wesentlich beschleunigt.

**Patentansprüche**

1. Verfahren zur optischen Kohärenztomographie, bei welchem

- in ein Interferometer (10) Licht (14) mit einer mittleren Wellenlänge (λ) eingekoppelt wird,
- von dem Interferometer (10) Licht ausgegeben wird, mit dem eine Probe (1) bestrahlt wird, wobei das Interferometer (10) einen Strahlteiler (13) und einen Reflektor (12) umfasst,
- in einer Tiefe (T) in der Probe (1) von der Probe (1) reflektiertes Licht von einem Detektor (11) erfasst wird, wobei die Tiefe (T) in der Probe (1) des von der Probe (1) reflektierten und vom Detektor (11) erfassten Lichts durch eine Veränderung des Abstandes des Reflektors (12) vom Strahlteiler (13) eingestellt wird, wobei die Veränderung des Abstandes wesentlich größer ist als die mittlere Wellenlänge (λ) des in das Interferometer (10) eingekoppelten Lichts (14),
- die Abbildungseigenschaften eines zwischen dem Strahlteiler (13) und der Probe (1) befindlichen Probenobjektivs (15) in der Weise gesteuert werden, dass ein in oder auf der Probe (1) liegender Fokus, in welchem das vom Interferometer (10) ausgegebene Licht fokussiert wird, im Bereich (K) der Tiefe (T) der Probe (1) liegt,
- für eine bestimmte endliche Tiefe (T) der Reflektor (12) in mindestens drei unterschiedliche Positionen (P1, P2, P3) mit unterschiedlichen optischen Abständen zum Strahlteiler (13) gebracht wird, wobei die Schrittweite zwischen den unterschiedlichen Positionen (P1, P2, P3) kleiner ist als die mittlere Wellenlänge (λ), und, während sich der Reflektor (12) in der jeweiligen Position (P1, P2, P3) befindet, das in einer bestimmten Tiefe (T) in der Probe (1) von der Probe (1) reflektierte Licht vom Detektor (11) mehrmals erfasst und in entsprechende Detektorbilder in Form von Interferenzbildern umgewandelt wird,
- die für die jeweilige Position (P1, P2, P3) des Reflektors (12) erhaltenen Detektorbilder gemittelt werden, wobei jeweils ein gemitteltes Detektorbild ($I_0$, $I_{120}$, $I_{240}$) in Form eines gemittelten Interferenzbildes erhalten wird, und
- aus den für die unterschiedlichen Positionen (P1, P2, P3) des Reflektors (12) erhaltenen gemittelten Detektorbildern ($I_0$, $I_{120}$, $I_{40}$) ein Tomogramm (B) für die bestimmte endliche Tiefe (T) ermittelt wird.

2. Verfahren nach Anspruch 1, wobei der Reflektor (12) durch Verschieben des Reflektors (12) um jeweils eine Schrittweite in die mehreren unterschiedlichen Positionen (P1, P2, P3) gebracht wird, wobei die Schrittweite kleiner ist als die mittlere Wellenlänge (λ).

3. Verfahren nach Anspruch 1 oder 2, wobei jedem Bildpunkt von drei gemittelten Detektorbildern ($I_0$, $I_{120}$, $I_{240}$) jeweils eine gemittelte Intensität ($I_0$, $I_{120}$ bzw. $I_{240}$) zugeordnet ist und entsprechende Bildpunkte (B) des Tomogramms aus den gemittelten Intensitäten ($I_0$, $I_{120}$ bzw. $I_{240}$) ermittelt werden.

4. Verfahren nach einem der vorangehenden Ansprüche, wobei, während sich der Reflektor (12) in der jeweiligen Position (P1, P2, P3) befindet, das von der Probe (1) reflektierte Licht vom Detektor (11) mindestens 50 mal erfasst und in mindestens 50 entsprechende Detektorbilder umgewandelt wird.

5. Verfahren nach einem der vorangehenden Ansprüche, wobei das in das Interferometer (10) einzukoppelnde Licht (14) von einer thermischen Lichtquelle (18), insbesondere von einer Halogen-Lichtquelle (18), erzeugt und durch ein spektrales Gauss-Filter (19) gefiltert wird.

6. Verfahren nach einem der vorangehenden Ansprüche, wobei das von der Probe (1) reflektierte und vom Detektor (11) detektierte Licht, während sich der Reflektor (12) in der jeweiligen Position (P1, P2, P3) befindet, aus einer bestimmten Tiefe (T) der Probe (1) stammt und die Tiefe (T) durch eine Veränderung des Abstandes eines zwischen dem Strahlteiler (13) und dem Reflektor (12) befindlichen Reflektorobjektivs (17) vom Strahlteiler (13) eingestellt wird, wobei die Veränderung des Abstandes wesentlich größer ist als die mittlere Wellenlänge (λ) des in das Interferometer (10) eingekoppelten Lichts (14).

7. Verfahren nach Anspruch 2 und 6, wobei das Verschieben des Reflektors (12) um jeweils eine Schrittweite, welche kleiner ist als die mittlere Wellenlänge (λ), durch einen ersten Antrieb (21) erfolgt und die Veränderung des Abstandes des Reflektors (12) und/oder des Reflektorobjektivs (17) vom Strahlteiler (13), welche wesentlich größer ist als die mittlere Wellenlänge (λ) des in das Interferometer (10) eingekoppelten Lichts (14), durch einen zweiten Antrieb (22 - 25), welcher vom ersten Antrieb (21) verschieden ist, erfolgt.

8. Verfahren nach Anspruch 7, wobei der zweite Antrieb (22 - 25) den Reflektor (12) und das Reflektorobjektiv (17) gemeinsam und der erste Antrieb (21) nur den Reflektor (12) alleine verschiebt.

9. Verfahren nach einem der vorangehenden Ansprüche, wobei der Reflektor (12) nach der Ermittlung eines Tomogramms (B) in seiner zuletzt eingenommenen Endposition (P3) bleibt und nach dem Einstellen einer anderen Tiefe (T), aus welcher das von der Probe (1) reflektierte und vom Detektor (11) detektierte Licht stammt, von der Endposition (P3) aus schrittweise über eine oder mehrere Zwischenpositionen (P2) in seine Ausgangsposition (P1) zurückbewegt wird, wobei das von der Probe (1) reflektierte Licht vom Detektor (11) mehrmals erfasst wird und in entsprechende Detektorbilder umgewandelt wird, während sich der Reflektor (12) in der jeweiligen Position (P3, P2, P1) befindet.

10. Verfahren nach einem der vorangehenden Ansprüchen, wobei bei der Mittelung der Detektorbilder nur diejenigen bei der jeweiligen Position (P1, P2, P3) des Reflektors (12) erhaltenen Detektorbilder herangezogen werden, die in Zeitpunkten (ti) erfasst wurden, in denen sich der Reflektor (12) in der jeweiligen Position (P1, P2, P3) in einer Ruhelage befand.

11. System zur optischen Kohärenztomographie mit

- einem Interferometer (10) zur Ausgabe von Licht, mit dem eine Probe (1) bestrahlt wird, wobei das Interferometer (10) einen Strahlteiler (13) und mindestens einen Reflektor (12) umfasst,
- einem Detektor (11) zur Erfassung von Licht, welches in einer Tiefe (T) in der Probe (1) von der Probe (1) reflektiert wird,
- Mitteln (22-25) zur Veränderung des Abstandes zwischen Reflektor (12) und Strahlteiler (13) und
- einer Steuerungseinheit (20) eingerichtet zur Steuerung des Systems in der Weise, dass

- die Tiefe (T) in der Probe (1) des von der Probe (1) reflektierten und vom Detektor (11) erfassten Lichts durch eine Veränderung des Abstandes des Reflektors (12) vom Strahlteiler (13) eingestellt wird, wobei die Veränderung des Abstandes wesentlich größer ist als die mittlere Wellenlänge ($\lambda$) von in das Interferometer (10) eingekoppeltem Licht (14),
- die Abbildungseigenschaften eines zwischen dem Strahlteiler (13) und der Probe (1) befindlichen Probenobjektivs (15) in der Weise gesteuert werden, dass ein in oder auf der Probe (1) liegender Fokus, in welchem vom Interferometer (10) ausgegebenes Licht fokussiert wird, im Bereich (K) der Tiefe (T) der Probe (1) liegt,
- für eine bestimmte endliche Tiefe (T) der Reflektor (12) in mindestens drei unterschiedliche Positionen (P1, P2, P3) mit unterschiedlichen optischen Abständen zum Strahlteiler (13) gebracht wird, wobei die Schrittweite zwischen den unterschiedlichen Positionen (P1, P2, P3) kleiner ist als die mittlere Wellenlänge ($\lambda$), und, während sich der Reflektor (12) in der jeweiligen Position (P1, P2, P3) befindet, das in einer bestimmten Tiefe (T) der Probe (1) von der Probe (1) reflektierte Licht vom Detektor (11) mehrmals erfasst und in entsprechende Detektorbilder in Form von Interferenzbildern umgewandelt wird,
- die für die jeweilige Position (P1, P2, P3) des Reflektors (12) erhaltenen Detektorbilder gemittelt werden, wobei jeweils ein gemitteltes Detektorbild ($I_0$, $I_{120}$, $I_{240}$) in Form eines gemittelten Interferenzbildes erhalten wird, und
- aus den für die unterschiedlichen Positionen (P1, P2, P3) erhaltenen gemittelten Detektorbildern ($I_0$, $I_{120}$, $I_{240}$) ein Tomogramm (B) für die bestimmte Tiefe (T) ermittelt wird.

12. System nach Anspruch 11, wobei ein erster Antrieb (21) zum Verschieben des Reflektors (12) um jeweils eine Schrittweite in die mehreren unterschiedlichen Positionen (P1, P2, P3) vorgesehen ist, wobei die Schrittweite kleiner ist als die mittlere Wellenlänge ($\lambda$) des in das Interferometer (11) eingekoppelten Lichts (14), und ein zweiter Antrieb (22 - 25) zu einer Veränderung des Abstandes des Reflektors (12) und/oder eines zwischen dem Strahlteiler (13) und dem Reflektor (12) befindlichen Reflektorobjektivs (17) vom Strahlteiler (13) vorgesehen ist, wobei die Veränderung des Abstandes wesentlich größer ist als die mittlere Wellenlänge ($\lambda$) des in das Interferometer (10) eingekoppelten Lichts (14) und der zweite Antrieb (22 - 25) vom ersten Antrieb (21) verschieden ist.

13. System nach Anspruch 12, wobei der zweite Antrieb (22 - 25) als selbsthemmender Antrieb ausgebildet ist.

14. System nach Anspruch 12 oder 13, wobei der Reflektor (12) und das Reflektorobjektiv (17) derart mit dem ersten Antrieb (21) und dem zweiten Antrieb (22 - 25) gekoppelt sind, dass der zweite Antrieb (22 - 25) den Reflektor (12) und das Reflektorobjektiv (17) gemeinsam und der erste Antrieb (21) nur den Reflektor (12) alleine verschieben kann.

**Claims**

1. Method for optical coherence tomography, in which:

- light (14) having a mean wavelength ($\lambda$) is coupled into an interferometer (10),
- the interferometer (10) emits light, with which a sample (1) is irradiated, wherein the interferometer (10) comprises a beam splitter (13) and a reflector (12),
- light reflected by the sample (1) at a depth (T) in the sample (1) is detected by a detector (11), wherein the depth (T) in the sample (1) of the light reflected by the sample (1) and detected by the detector (11) is adjusted by a change of the distance of the reflector (12) from the beam splitter (13), said change of the distance being substantially larger than the mean wavelength ($\lambda$) of the light (14) which is coupled into the interferometer (10),

- the imaging properties of a sample objective (15) located between the beam splitter (13) and the sample (1) are controlled in such a way that a focus located in or on the sample (1), at which the light emitted by the interferometer (10) is focused, is located in the region (K) of the depth (T) of the sample (1),

- for a certain finite depth (T), the reflector (12) is brought in at least three different positions (P1, P2, P3) having different optical distances from the beam splitter (13), wherein the increment between the different positions (P1, P2, P3) is smaller than the mean wavelength ($\lambda$) and, while the reflector (12) is located at the respective position (P1, P2, P3), the light reflected by the sample (1) at a certain depth (T) in the sample (1) is detected several times by the detector (11) and is converted into corresponding detector images in the form of interference images,

- the detector images obtained for the respective position (P1, P2, P3) of the reflector (12) are averaged, whereby a respective averaged detector image ($I_0$, $I_{120}$, $I_{240}$) is obtained in the form of an averaged interference image, and

a tomogram (B) for the certain finite depth (T) is determined from the averaged detector images ($I_0$, $I_{120}$, $I_{240}$) obtained for the different positions (P1, P2, P3) of the reflector (12).

2. Method according to claim 1, wherein the reflector (12) is brought into the several different positions (P1, P2, P3) by shifting the reflector (12) each time by an increment which is smaller than the mean wavelength ($\lambda$).

3. Method according to claim 1 or 2, wherein an averaged intensity ($I_0$, $I_{120}$, $I_{240}$) is assigned to each respective image point of three averaged detector images ($I_0$, $I_{120}$, $I_{240}$, respectively) and corresponding image points (B) of the tomogram are determined from the averaged intensities ($I_0$, $I_{120}$ and $I_{240}$, respectively).

4. Method according to any one of the preceding claims, wherein, while the reflector (12) is located in the respective position (P1, P2, P3), the light reflected by the sample (1) is detected at least 50 times by the detector (11) and is converted into at least 50 corresponding detector images.

5. Method according to any one of the preceding claims, wherein the light (14) to be coupled into the interferometer (10) is generated by a thermal light source (18), in particular a halogen light source, and is filtered by a spectral Gaussian filter (19).

6. Method according to any one of the preceding claims, wherein the light reflected by the sample (1) and detected by the detector (11), while the reflector (12) is located in the respective position (P1, P2, P3), originates from a certain depth (T) of the sample (1) and the depth (T) is adjusted by a change of the distance of a reflector objective (17), which is located between the beam splitter (13) and the reflector (12), from the beam splitter (13), said change of the distance being substantially larger than the mean wavelength ($\lambda$) of the light (14) which is coupled into the interferometer (10).

7. Method according to claim 2 and 6, wherein the shift of the reflector (12) each time by an increment which is smaller than the mean wavelength ($\lambda$) is performed by a first drive (21) and the change of the distance of the reflector (12) and/or of the reflector objective (17) from the beam splitter (13), which is substantially larger than the mean wavelength ($\lambda$) of the light (14) coupled into the interferometer (10), is performed by a second drive (22 - 25) which is different from the first drive (21).

8. Method according to claim 7, wherein the second drive (22 - 25) jointly shifts the reflector (12) and the reflector objective (17) and the first drive (21) solely shifts the reflector (12).

9. Method according to any one of the preceding claims, wherein the reflector (12), after determining a tomogram (B), remains in its last end position (P3) and after setting another depth (T), from which the light reflected by the sample (1) and detected by the detector (11) originates, is stepwise returned from the end position (P3) over one or more intermediate positions (P2) into its initial position (P1), wherein the light reflected by the sample (1) is detected several times by the detector (11) and is converted into corresponding detector images, while the reflector (12) is located in the respective position (P3, P2, P1).

10. Method according to any one of the preceding claims, wherein, when averaging the detector images, only the detector images obtained at the respective position (P1, P2, P3) of the reflector (12) are used which have been detected in time points (ti) at which the reflector (12) was in an idle position at the respective position (P1, P2, P3).

11. System for optical coherence tomography with

- an interferometer (10) for emitting light, with which a sample (1) is irradiated, wherein the interferometer (10) comprises a beam splitter (13) and at least one reflector (12),
- a detector (11) for detecting light which is reflected by the sample (1) in a depth (T) in the sample (1),
- means (22-25) for changing the distance between reflector (12) and beam splitter (13) and
- a control unit (20) configured to control the system in a way such that

- the depth (T) in the sample (1) of the light reflected by the sample (1) and detected by the detector (11) is adjusted by a change of the distance of the reflector (12) from the beam splitter (13), whereby the change of the distance is substantially larger than the mean wavelength ($\lambda$) of light (14) coupled into the interferometer (10),
- the imaging properties of a sample objective (15), which is located between the beam splitter (13) and the sample (1), are controlled in such a way that a focus located in or on the sample (1), at which the light emitted by the interferometer (10) is focussed, is located in the region (K) of the depth (T) of the sample (1),
- for a certain finite depth (T), the reflector (12) is brought in at least three different positions (P1, P2, P3) having different optical distances from the beam splitter (13), wherein the increment between the different positions (P1, P2, P3) is smaller than the mean wavelength ($\lambda$) and, while the reflector (12) is located at the respective position (P1, P2, P3), the light reflected by the sample (1) at a certain depth (T) in the sample (1) is detected several times by the detector (11) and is converted into corresponding detector images in the form of interference images,
- the detector images obtained for the respective position (P1, P2, P3) of the reflector (12) are averaged, whereby a respective averaged detector image ($I_0$, $I_{120}$, $I_{240}$) is obtained in the form of an averaged interference image, and
- a tomogram (B) for the certain finite depth (T) is determined from the averaged detector images ($I_0$, $I_{120}$, $I_{240}$) obtained for the different positions (P1, P2, P3) of the reflector (12).

12. System according to claim 11, wherein a first drive (21) for shifting the reflector (12) each time by an increment in the several different positions (P1, P2, P3) is provided, wherein the increment is smaller than the mean wavelength ($\lambda$) of the light (14) coupled into the interferometer (11), and a second drive (22-25) for changing the distance of the reflector (12) and/or a reflector objective (17), which is located between the beam splitter (13) and the reflector (12), from the beam splitter (13) is provided, wherein the change of the distance is substantially larger then the mean wavelength ($\lambda$) of the light (14) coupled into the interferometer (10), and the second drive (22-25) is different from the first drive (21).

13. System according to claim 12, wherein the second drive (22-25) is configured as a self-retaining drive.

14. System according to calim 12 or 13, wherein the reflector (12) and the reflector objective (17) are coupled with the first drive (21) and the second drive (22-25) in such a way that the second drive (22-25) can jointly shift the reflector (12) and the reflector objective (17) and the first drive (21) can solely shift the reflector (12).

**Revendications**

1. Procédé de tomographie en cohérence optique dans lequel :

- de la lumière (14) ayant une longueur d'onde moyenne ($\lambda$) est couplée dans un interféromètre (10),
- l'interféromètre (10) émet de la lumière servant à irradier un échantillon (1), ledit interféromètre (10) comprenant un diviseur de faisceau (13) et un réflecteur (12),
- la lumière réfléchie par l'échantillon (1) à une profondeur (T) dans l'échantillon (1) est détectée par un détecteur (11), ladite profondeur (T) dans l'échantillon (1) de la lumière réfléchie par l'échantillon (1) et détectée par le détecteur (11) étant réglée en modifiant la distance du réflecteur (12) au diviseur de faisceau (13), ladite modification de la distance étant substantiellement supérieure à la longueur d'onde moyenne ($\lambda$) de la lumière (14) couplée dans l'interféromètre (10),
- les propriétés de formation d'image d'un objectif d'échantillonnage (15) situé entre le diviseur de faisceau (13) et l'échantillon (1) sont contrôlées de façon à ce qu'un foyer situé dans ou sur l'échantillon (1) et sur lequel est focalisée la lumière émise par l'interféromètre (10) se situe dans une zone (K) de la profondeur (T) de l'échantillon (1),
- pour une certaine profondeur finie (T), le réflecteur (12) est positionné à au moins trois différentes positions (P1, P2, P3) présentant différentes distances optiques au diviseur de faisceau (13), où l'incrément entre les différentes positions (P1, P2, P3) est inférieure à la longueur d'onde moyenne ($\lambda$) et, lorsque le réflecteur (12) se trouve à la position respective (P1, P2, P3), la lumière réfléchie par l'échantillon (1) à une certaine profondeur (T) dans l'échantillon (1) est détectée plusieurs fois par le détecteur (11) et est convertie en images de détecteur correspondantes sous forme d'images d'interférence,

- les images de détecteur obtenues pour la position respective (P1, P2, P3) du réflecteur (12) sont moyennées, et une image de détecteur moyennée respective ($I_0$, $I_{120}$, $I_{240}$) étant obtenue sous forme d'une image d'interférence moyennée, et

- un tomogramme (B) pour la profondeur finie prédéfinie (T) est déterminé à partir des images de détecteur moyennées ($I_0$, $I_{120}$, $I_{240}$) obtenues pour les différentes positions (P1, P2, P3) du réflecteur (12).

2. Procédé selon la revendication 1, **caractérisé en ce que** le réflecteur (12) est positionné aux plusieurs positions différentes (P1, P2, P3) en déplaçant chaque fois le réflecteur (12) d'un incrément inférieure à la longueur d'onde moyenne ($\lambda$).

3. Procédé selon la revendication 1 ou 2, **caractérisé en ce qu'**une intensité moyennée ($I_0$, $I_{120}$, $I_{240}$) est assignée à chaque point d'image respectif de trois images de détecteur moyennées (respectivement $I_0$, $I_{120}$ et $I_{240}$,) et que des points d'image correspondants (B) du tomogramme sont déterminés à partir des intensités moyennées (respectivement $I_0$, $I_{120}$ et $I_{240}$).

4. Procédé selon l'une quelconque des revendications précédentes, **caractérisé en ce que**, lorsque le réflecteur (12) se situe à la position respective (P1, P2, P3), la lumière réfléchie par l'échantillon (1) est détectée au moins 50 fois par le detector (11) et est convertie en au moins 50 images de détecteur correspondantes.

5. Procédé selon l'une quelconque des revendications précédentes, **caractérisé en ce que** la lumière (14) à coupler dans l'interféromètre (10) est générée par une source de lumière thermique (18), en particulier une source lumineuse à l'halogène, et est filtrée à l'aide d'un filtre gaussien spectral (19).

6. Procédé selon l'une quelconque des revendications précédentes, **caractérisé en ce que** la lumière réfléchie par l'échantillon (1) et détectée par le détecteur (11), lorsque le réflecteur (12) se situe à la position respective (P1, P2, P3), provient d'une certaine profondeur (T) de l'échantillon (1) et que la profondeur (T) est réglée en modifiant la distance d'un objectif de réflecteur (17), situé entre le diviseur de faisceau (13) et le réflecteur (12), au diviseur de faisceau (13), ladite modification de la distance étant substantiellement supérieure à la longueur d'onde moyenne ($\lambda$) de la lumière (14) couplée dans l'interféromètre (10).

7. Procédé selon la revendication 2 et 6, **caractérisé en ce que** le déplacement du réflecteur (12), respectivement d'un incrément inférieure à la longueur d'onde moyenne ($\lambda$), est effectué à l'aide d'un premier entraînement (21) et que la modification de la distance du réflecteur (12) et/ou de l'objectif de réflecteur (17) au diviseur de faisceau (13) qui est substantiellement supérieure à la longueur d'onde moyenne ($\lambda$) de la lumière (14) couplée dans l'interféromètre (10) est effectuée à l'aide d'un deuxième entraînement (22 - 25) qui est différent du premier entraînement (21).

8. Procédé selon la revendication 7, **caractérisé en ce que** le deuxième entraînement (22 - 25) déplace conjointement le réflecteur (12) et l'objectif de réflecteur (17) et que le premier entraînement (21) ne déplace que le réflecteur (12).

9. Procédé selon l'une quelconque des revendications précédentes, **caractérisé en ce que**, après la détermination d'un tomogramme (B), le réflecteur (12) reste dans sa dernière position terminale (P3) et est retourné pas à pas, après le réglage d'une autre profondeur (T) dont provient la lumière réfléchie par l'échantillon (1) et détectée par le détecteur (11), de la position terminale (P3), en passant par une ou plusieurs positions intermédiaires (P2), vers sa position initiale (P1), ladite lumière réfléchie par l'échantillon (1) étant détectée plusieurs fois par le detector (11) et étant convertie en images de détecteur correspondantes lorsque le réflecteur (12) se situe à la position respective (P3, P2, P1).

10. Procédé selon l'une quelconque des revendications précédentes, **caractérisé en ce que** le calcul de la moyenne des images de détecteur n'utilise que les images de détecteur, obtenues à la position respective (P1, P2, P3) du réflecteur (12), qui ont été détectées à des points temporels (ti) auxquels le réflecteur (12) était en position de repos à la position respective (P1, P2, P3).

11. Système de tomographie en cohérence optique comprenant

- un interféromètre (10) pour émettre de la lumière, par laquelle un échantillon (1) est irradié, ledit interféromètre (10) comprenant un diviseur de faisceau (13) et au moins un réflecteur (12),
- un détecteur (11) pour détecter la lumière réfléchie par l'échantillon à une profondeur dans l'échantillon (1),
- des moyens (22-25) pour modifier la distance entre le réflecteur (12) et le diviseur de faisceau (13), et

- d'une unité de commande (20) configuré pour commander le système de manière à ce que

- la profondeur (T) dans l'échantillon (1) de la lumière réfléchie par l'échantillon et détectée par le détecteur (11) est ajustée par une modification de la distance de le réflecteur (12) au le diviseur de faisceau (12), ladite modification de la distance étant substantiellement supérieure à la longueur d'onde moyenne ($\lambda$) de la lumière (14) couplée dans l'interféromètre (10),

- les propriétés de formation d'image d'un objectif d'échantillonnage (15) situé entre le diviseur de faisceau (13) et l'échantillon (1) sont contrôlées de façon à ce qu'un foyer situé dans ou sur l'échantillon (1) et sur lequel est focalisée la lumière émise par l'interféromètre (10) se situe dans la zone (K) de la profondeur (T) de l'échantillon (1),

- pour une certaine profondeur finie (T), le réflecteur (12) est positionné à au moins trois différentes positions (P1, P2, P3) présentant différentes distances optiques au diviseur de faisceau (13), où l'incrément entre les différentes positions (P1, P2, P3) est inférieure à la longueur d'onde moyenne ($\lambda$) et, lorsque le réflecteur (12) se trouve à la position respective (P1, P2, P3), la lumière réfléchie par l'échantillon (1) à une certaine profondeur (T) dans l'échantillon (1) est détectée plusieurs fois par le détecteur (11) et est convertie en images de détecteur correspondantes sous forme d'images d'interférence,

- les images de détecteur obtenues pour la position respective (P1, P2, P3) du réflecteur (12) sont moyennées, et une image de détecteur moyennée respective ($I_0$, $I_{120}$, $I_{240}$) étant obtenue sous forme d'une image d'interférence moyennée, et

- un tomogramme (B) pour la profondeur finie prédéfinie (T) est déterminé à partir des images de détecteur moyennées ($I_0$, $I_{120}$, $I_{240}$) obtenues pour les différentes positions (P1, P2, P3) du réflecteur (12).

**12.** Système selon la revendication 11, **caractérisé en ce qu'**un premier entraînement (21) destiné à déplacer le réflecteur (12) par un incrément respectif aux plusieurs positions différentes (P1, P2, P3), ledit incrément est inférieur à la longueur d'onde moyenne ($\lambda$) de la lumière couplée dans l'interféromètre (11), et qu'un deuxième entraînement (22-25) destiné à changer la distance du réflecteur (12) et/ou de l'objectif de réflecteur (17), située entre le diviseur de faisceau (13) et le réflecteur, au diviseur de faisceau (13), et que ladite changement de la distance est substantiellement supérieure à la longueur d'onde moyenne ($\lambda$) de la lumière (14) couplée dans l'interféromètre (10), et le deuxième entraînement (22-25) est différente de la première entraînement (21).

**13.** Système selon la revendication 12, **caractérisé en ce que** le deuxième entraînement (22-25) est formé autobloquant.

**14.** Système selon la revendication 12 ou 13, **caractérisé en ce que** le réflecteur (12) et l'objectif de réflecteur (17) sont connecter à le première entraînement (17) et le deuxième entraînement (22-25) de façon à ce que le deuxième entraînement (22-25) peut déplace conjointement le réflecteur (12) et l'objectif de réflecteur (17) et que le premier entraînement (21) ne déplace que le réflecteur (12).

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20040263859 A1

**In der Beschreibung aufgeführte Nicht-Patentliteratur**

- **Y. WATANABE et al.** *OPTICS COMMUNICATIONS,* 2006, vol. 261, 376-380

- **Y. WATANABE et al.** *APPLIED OPTICS,* 2005, vol. 44 (8), 1387-1392